# FASCICULE DE BREVET EUROPEEN

(11) **EP 2 095 997 B1**
(45) Date de publication et mention de la délivrance du brevet: **01.12.2010**
(21) Numéro de dépôt: 09290120.6
(22) Date de dépôt: 18.02.2009
(51) Int. Cl.: B60R 5/04

(54) **Ensemble comprenant une tablette de recouvrement des bagages d'un véhicule automobile et deux ébénisteries latérales de compartiment à bagages**
Anordnung bestehend aus einer Gepäckabdeckplatte für ein Kraftfahrzeug und zwei seitliche, kunsthandwerklich gefertigte Möbel für den Gepäckraum
Assembly comprising a shelf for covering the luggage in an automobile and two side cabinet elements for a luggage compartment

(30) Priorité: 29.02.2008 FR 0801151
(43) Date de publication de la demande: 02.09.2009
(73) Titulaire: Centre d'étude et de recherche pour l'automobile (CERA), 51100 Reims (FR)
(72) Inventeur: Lecomte, Alicia, 51100 Reims (FR); Bayle, André-Xavier, 51100 Reims (FR); Debled, Emmanuel, 51500 Taissy (FR); Bieven, Franck, 75015 Paris (FR)
(74) Mandataire: Sayettat, Julien Christian

(56) Documents cités:
- EP-A- 0 662 406
- FR-A- 1 508 091
- FR-A- 2 877 292
- JP-A- 10 095 279
- JP-U- 58 033 330

## Description

L'invention concerne un ensemble comprenant une tablette de recouvrement des bagages d'un véhicule automobile et deux ébénisteries latérales de compartiment à bagages.

Il est connu, notamment du document EP-0 662 406 A1, de réaliser un ensemble comprenant une tablette de recouvrement des bagages d'un véhicule automobile et deux ébénisteries latérales de compartiment à bagages, ladite tablette étant montée en appui latéral sur lesdites ébénisteries, ladite tablette comprenant :
- un panneau et un volet principal articulés entre eux selon une première charnière disposée transversalement de sorte que ledit volet principal soit actionnable en rotation d'un demi-tour entre une configuration d'utilisation, où il est coplanaire avec ledit panneau, et une configuration repliée où il est replié contre ledit panneau,
- un moyen d'actionnement vers la configuration repliée, comprenant notamment un moyen de rappel élastique,
- un moyen de verrouillage réversible en configuration d'utilisation,
- un volet annexe articulé audit volet principal selon une deuxième charnière parallèle à ladite première charnière, de sorte à permettre un pliage en accordéon de ladite tablette.

Pour déclencher le pliage de la tablette, l'utilisateur doit réaliser une manoeuvre de déverrouillage du moyen de verrouillage, notamment par actionnement d'une poignée spécifique, ce qui complique la réalisation de la tablette et requiert une manipulation malaisée.

L'invention a pour but de pallier ces inconvénients en proposant un ensemble présentant une ergonomie de déverrouillage améliorée, et ce selon un agencement simplifié.

A cet effet, l'invention propose un ensemble comprenant une tablette de recouvrement des bagages d'un véhicule automobile et deux ébénisteries latérales de compartiment à bagages, ladite tablette étant montée en appui latéral sur lesdites ébénisteries, ladite tablette comprenant :
- un panneau et un volet principal articulés entre eux selon une première charnière disposée transversalement de sorte que ledit volet principal soit actionnable en rotation d'un demi-tour entre une configuration d'utilisation, où il est coplanaire avec ledit panneau, et une configuration repliée où il est replié contre ledit panneau,
- un moyen d'actionnement vers la configuration repliée,
- un moyen de verrouillage réversible en configuration d'utilisation,
- un volet annexe articulé audit volet principal selon une deuxième charnière parallèle à ladite première charnière, de sorte à permettre un pliage en accordéon de ladite tablette,
les zones latérales arrière dudit volet annexe étant en porte à faux relativement auxdites ébénisteries lorsque ladite tablette est en configuration d'utilisation et lorsque le verrouillage est activé, alors que les zones latérales avant dudit volet annexe sont en appui sur lesdites ébénisteries, de sorte à permettre une rotation dudit volet annexe selon ladite deuxième charnière par appui sur la partie arrière dudit volet annexe, ladite rotation permettant de réaliser le déverrouillage par actionnement en rotation dudit volet annexe selon ladite deuxième charnière.

Dans cette description, les termes de positionnement dans l'espace (haut, bas, supérieur, inférieur, longitudinal, transversal, latéral, avant, arrière, vertical, horizontal, ...) sont pris en référence à l'ensemble disposé dans le véhicule.

L'agencement proposé permet, par une simple pression de l'utilisateur sur l'arrière de la tablette, de déclencher le pliage de la tablette, et ce, comme on le verra dans la description qui suit, selon un agencement particulièrement simple.

D'autres particularités et avantages de l'invention apparaîtront dans la description qui suit, faite en référence aux figures jointes dans lesquelles :

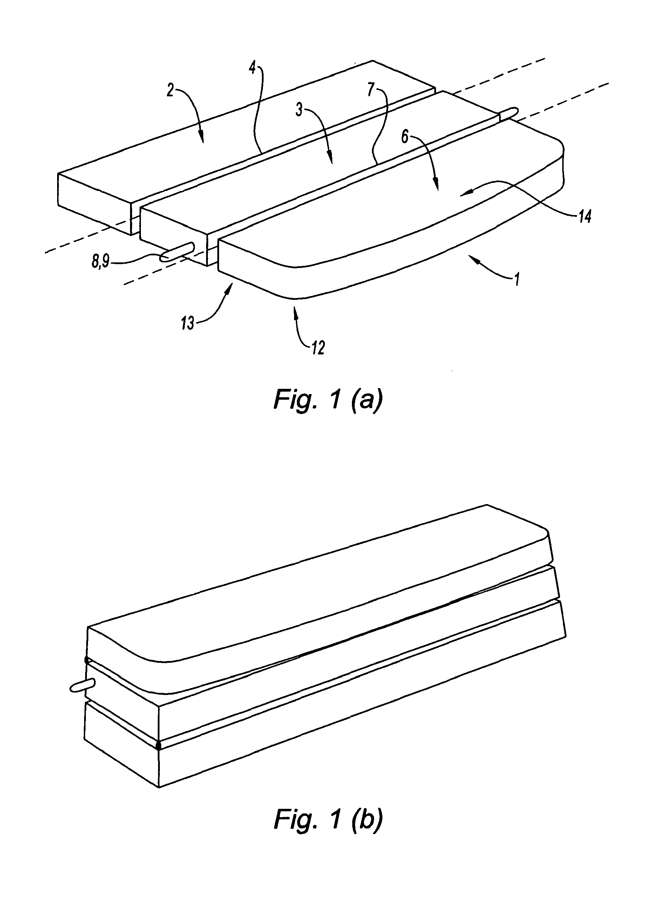

- la figure 1 est une représentation schématique en perspective d'une tablette selon une réalisation, en configuration d'utilisation (a) et en configuration repliée (b),
- la figure 2 est une vue en perspective (a) et latérale (b) d'une première charnière selon une réalisation,
- la figure 3 est une vue en perspective partielle d'une ébénisterie pourvue d'un moyen de verrouillage réciproque selon une réalisation,
- la figure 4 est une vue latérale schématique partielle d'un ensemble comprenant une tablette et des ébénisteries latérales, le moyen de verrouillage étant verrouillé (a) et déverrouillé (b),
- la figure 5 est une coupe transversale schématique partielle de l'ensemble de la figure 4, le moyen de verrouillage étant verrouillé (a) et déverrouillé (b).

En référence aux figures, on décrit une tablette 1 de recouvrement des bagages d'un véhicule automobile, ladite tablette étant destinée à être montée en appui latéral sur des ébénisteries latérales 10 de compartiment à bagages, ladite tablette comprenant un panneau 2 - ici avant - et un volet principal 3 articulés entre eux selon une première charnière 4 - disposée ici transversalement - de sorte que ledit volet principal soit actionnable en rotation d'un demi tour entre une configuration d'utilisation, où il est coplanaire avec ledit panneau, et une configuration repliée où il est replié contre ledit panneau, ladite tablette comprenant en outre un moyen d'actionnement vers la configuration repliée.

On notera que les termes « panneau » et « volet » sont à considérer de façon générique. Ils peuvent par exemple être sous forme de plaques rigides ou de rideaux souples tendus sur des cadres rigides.

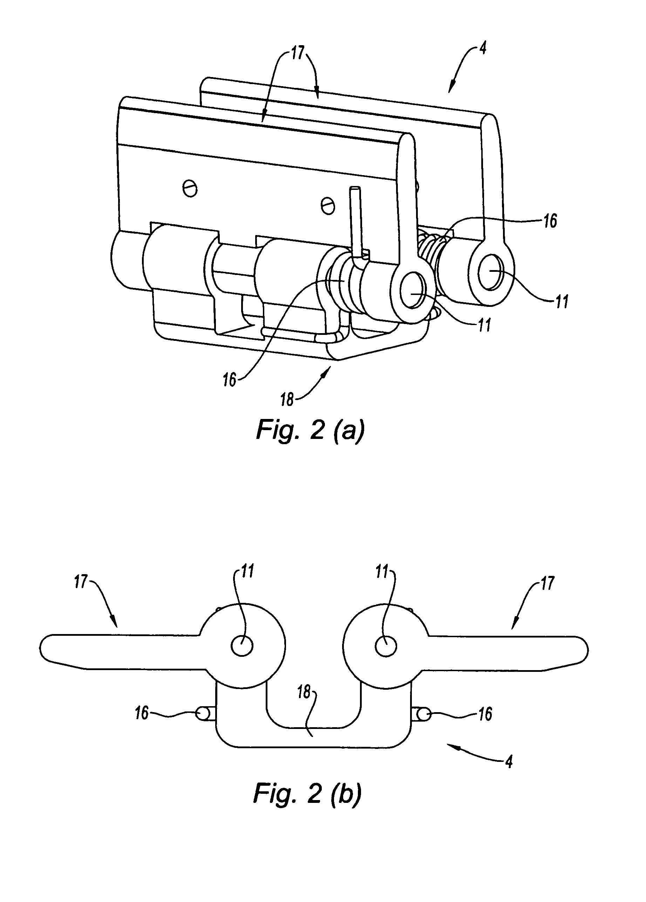

Selon la réalisation représentée en figure 2 et détaillée par la suite, le moyen d'actionnement comprend un moyen de rappel élastique, sous la forme d'au moins un ressort 16 agencé pour exercer un couple de rappel vers la configuration repliée.

La tablette 1 comprend en outre un volet annexe 6 articulé au volet principal 3 selon une deuxième charnière 7 parallèle à la première charnière 4, de sorte à permettre un pliage en accordéon de ladite tablette.

La tablette 1 comprend en outre un moyen de verrouillage 8 réversible en configuration d'utilisation.

Le moyen de verrouillage 8 comprend deux doigts 9 saillants de part et d'autre des bords latéraux d'un volet 3,6 - ici le volet 3 - lesdits doigts étant montés en coulissement transversal entre une position rétractée et une position déployée, lesdits doigts étant actionnés vers la position déployée par un moyen de contrainte élastique non représenté.

Selon une variante non représentée, le moyen de verrouillage 8 comprend deux éléments magnétiques, sous forme d'aimants ou de pièces attirables par un aimant, disposés respectivement selon les bords latéraux d'un volet 3,6, lesdits éléments étant destinés à coopérer en configuration d'utilisation avec des éléments réciproques prévus sur les ébénisteries latérales 10 de compartiment à bagages.

De façon non représentée, la tablette 1 peut comprendre en outre un moyen de freinage de la rotation du volet principal 3.

Selon une réalisation non représentée, le moyen de freinage comprend un rotor et un stator entre lesquels est interposée une substance visqueuse de freinage.

Un deuxième moyen freinage peut de même être prévu pour freiner la rotation du volet annexe 6.

Comme représenté en figure 2, la première charnière 4 comprend deux axes 11 de rotation, permettant l'articulation de deux rabats 17 par rapport à une entretoise centrale 18, l'espacement desdits axes étant agencé de sorte à permettre le repliement de la tablette 1 en tenant compte des épaisseurs du panneau 2 et du volet principal 3.

Le moyen d'actionnement est ici intégré à la première charnière 4 et comprend deux ressorts 16 disposés respectivement au niveau des axes 11 et agencés pour induire une fermeture de la charnière 4.

Selon une réalisation non représentée, la tablette 1 comprend un matériau de revêtement, ledit matériau s'étendant entre les volets 3,6 de sorte à former une deuxième charnière 7 souple.

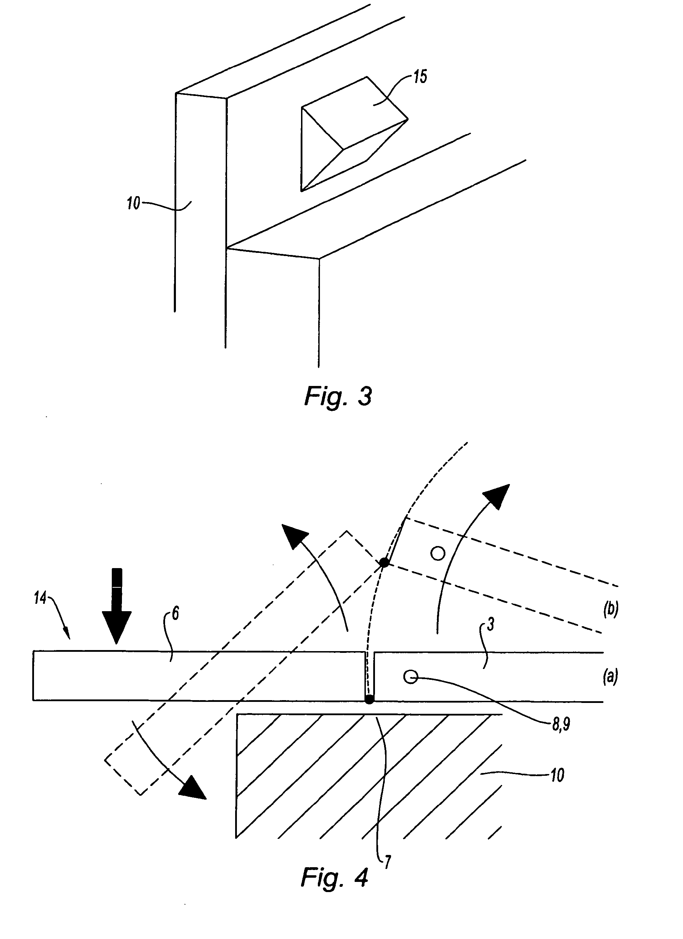

On décrit à présent un procédé de déverrouillage de la tablette 1, illustré par la figure 4, ladite tablette étant montée en appui sur des ébénisteries latérales 10 de compartiment à bagages, ledit procédé comprenant l'étape d'actionner en rotation le volet annexe 6 selon la deuxième charnière 7 pour déverrouiller le moyen de verrouillage.

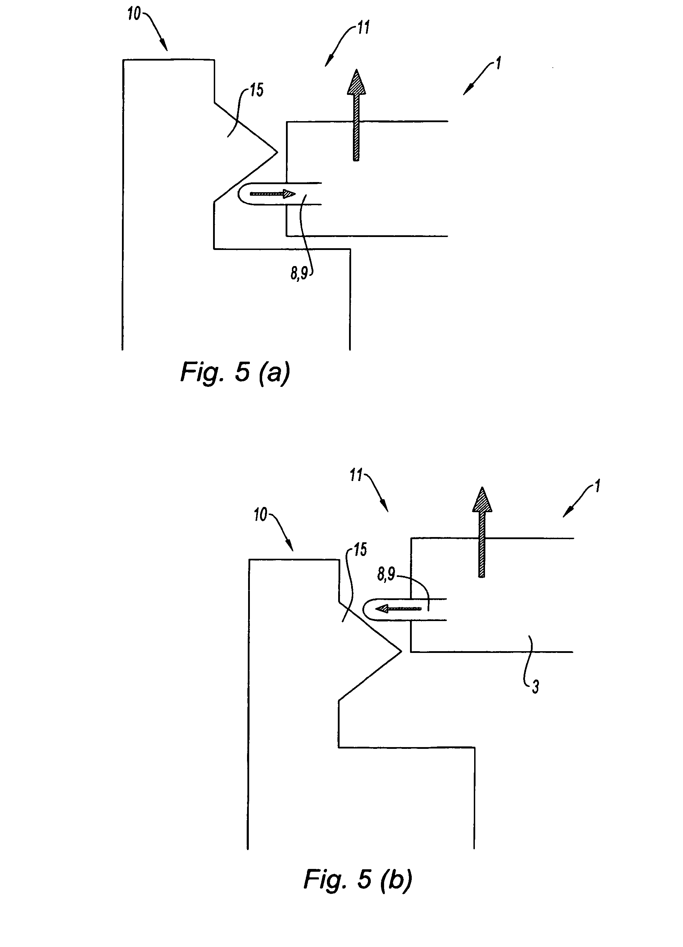

On décrit à présent, en référence aux figures 4 et 5, un ensemble 11 comprenant une tablette 1 et deux ébénisteries latérales 10 de compartiment à bagages, ledit ensemble présentant les caractéristiques suivantes : en configuration d'utilisation, les zones latérales arrière 12 du volet annexe 6 sont en porte à faux relativement aux ébénisteries 10, et le verrouillage est activé, alors que les zones latérales avant 13 sont en appui sur lesdites ébénisteries, de sorte à permettre une rotation dudit volet selon la deuxième charnière 7 par appui sur sa partie arrière 14, ladite rotation permettant de réaliser le déverrouillage par le procédé sus décrit, c'est à dire par actionnement en rotation du volet annexe 6 selon la deuxième charnière 7.

Les ébénisteries latérales 10 comprennent chacune un bossage 15 formant moyen de verrouillage réciproque, la rotation du volet annexe 6 par appui sur sa partie arrière 14 entraînant un passage des doigts 9 de part et d'autre desdits bossages avec rétraction desdits doigts à l'encontre des moyens de contrainte élastique.

Lorsque, de façon non représentée, le moyen de verrouillage 8 comprend deux éléments magnétiques, les ébénisteries latérales 10 comprennent chacune un élément magnétique réciproque, formant moyen de verrouillage réciproque.

De la sorte, la rotation du volet annexe 6 par appui sur sa partie arrière 14 entraîne une désolidarisation des éléments magnétiques.

Selon une variante non représentée, le moyen de verrouillage 8 comprend au moins une zone d'emboîtement coopérant en configuration d'utilisation avec une zone d'emboîtement réciproque, formant moyen de verrouillage réciproque, prévue sur au moins une ébénisterie latérale 10.

De la sorte, la rotation du volet annexe 6 par appui sur sa partie arrière 14 entraîne une désolidarisation des zones d'emboîtement.

## Revendications

1. Ensemble (11) comprenant une tablette (1) de recouvrement des bagages d'un véhicule automobile et deux ébénisteries latérales (10) de compartiment à bagages, ladite tablette étant montée en appui latéral sur lesdites ébénisteries, ladite tablette comprenant :
• un panneau (2) et un volet principal (3) articulés entre eux selon une première charnière (4) disposée transversalement de sorte que ledit volet principal soit actionnable en rotation d'un demi-tour entre une configuration d'utilisation, où il est coplanaire avec ledit panneau, et une configuration repliée où il est replié contre ledit panneau,
• un moyen d'actionnement vers la configuration repliée,
• un moyen de verrouillage (8) réversible en configuration d'utilisation,
• un volet annexe (6) articulé audit volet principal selon une deuxième charnière (7) parallèle à ladite première charnière, de sorte à permettre un pliage en accordéon de ladite tablette,
ledit ensemble étant **caractérisé en ce que** les zones latérales arrière (12) dudit volet annexe sont en porte à faux relativement auxdites ébénisteries lorsque ladite tablette est en configuration d'utilisation et lorsque le verrouillage est activé, alors que les zones latérales avant (13) dudit volet annexe sont en appui sur lesdites ébénisteries, de sorte à permettre une rotation dudit volet annexe selon ladite deuxième charnière par appui sur la partie arrière (14) dudit volet annexe, ladite rotation permettant de réaliser le déverrouillage par actionnement en rotation dudit volet annexe selon ladite deuxième charnière.

2. Ensemble selon la revendication 1, **caractérisé en ce que** le moyen de verrouillage (8) comprend deux doigts (9) saillants de part et d'autre des bords latéraux d'un volet (3,6), lesdits doigts étant montés en coulissement transversal entre une position rétractée et une position déployée, lesdits doigts étant actionnés vers la position déployée par un moyen de contrainte élastique respectif, les ébénisteries latérales (10) comprenant chacune un bossage (15) formant moyen de verrouillage réciproque, la rotation du volet annexe 6 par appui sur sa partie arrière (14) entraînant un passage des doigts (9) de part et d'autre desdits bossages avec rétraction desdits doigts à l'encontre desdits moyens de contrainte élastique.

3. Ensemble selon la revendication 1, **caractérisé en ce que** le moyen de verrouillage (8) comprend deux éléments magnétiques, les ébénisteries latérales (10) comprenant chacune un élément magnétique réciproque formant moyen de verrouillage réciproque.

4. Ensemble selon la revendication 1, **caractérisé en ce que** le moyen de verrouillage (8) comprend au moins une zone d'emboîtement coopérant en configuration d'utilisation avec une zone d'emboîtement réciproque, formant moyen de verrouillage réciproque, prévue sur au moins une ébénisterie latérale (10).

5. Ensemble selon l'une quelconque des revendications 1 à 4, **caractérisé en ce que** la tablette (1) comprend en outre un moyen de freinage de la rotation du volet principal (3), ledit moyen de freinage comprenant notamment un rotor et un stator entre lesquels est interposée une substance visqueuse de freinage.

6. Ensemble selon la revendication 5, **caractérisé en ce que** la tablette (1) comprend un deuxième moyen de freinage de la rotation du volet annexe (6).

7. Ensemble selon l'une quelconque des revendications 1 à 6, **caractérisé en ce que** la première charnière (4) comprend deux axes (11) de rotation.

8. Ensemble selon la revendication 7, **caractérisé en ce que** le moyen d'actionnement est intégré à la première charnière (4) et comprend deux ressorts (16) disposés respectivement au niveau des axes (11) et agencés pour induire une fermeture de ladite première charnière.

9. Ensemble selon l'une quelconque des revendications 1 à 8, **caractérisé en ce que** la tablette (1) comprend un matériau de revêtement, ledit matériau s'étendant entre les volets (3,6) de sorte à former deuxième charnière (7) souple.

## Claims

1. Ensemble (11) comprising a panel (1) for covering luggage of a motor vehicle and two lateral pieces of cabinetwork (10) for the boot, said panel being mounted bearing laterally against said pieces of cabinetwork, said panel comprising:
- a panel (2) and a main flap (3) articulated between them according to a first hinge (4) arranged transversally in such a way that said main flap can be actuated in rotation by a half-turn between a configuration for use, wherein it is coplanar with said panel, and a folded configuration wherein it is folded against said panel,
- a means of actuating towards the folded configuration,
- a means of reversible locking (8) in the configuration for use,
- an annex flap (6) articulated to said main flap according to a second hinge (7) parallel to said first hinge, in such a way as to make possible a folding in the form of an accordion of said panel,
said ensemble being **characterised in that** the rear lateral zones (12) of said annex flap are overhanging in relation to said pieces of cabinetwork when said panel is a configuration for use and when the locking is activated, while the front lateral zones (13) of said annex flap are bearing against said pieces of cabinetwork, in such a way as to make possible a rotation of said annex flap according to said second hinge by bearing against the rear portion (14) of said annex flap, said rotation making it possible to carry out the locking by actuation in rotation of said annex flap according to said second hinge.

2. Ensemble according to claim 1, **characterised in that** the means of locking (8) includes two fingers (9) protruding from either side of the lateral edges of a flap (3, 6), said fingers being mounted slidingly transversal between a retracted position and an unfolded position, said fingers able to be actuated towards the unfolded position by a means of a respective elastic constraint, the lateral pieces of cabinetwork (10) each comprising a boss (15) forming reciprocal means of locking, the rotation of the annex flap (6) by bearing against its rear portion (14) driving a passage of the fingers (9) on either side of said bosses with retraction of said fingers against said means of elastic constraint.

3. Ensemble according to claim 1, **characterised in that** the means of locking (8) comprises two magnetic elements, the lateral pieces of cabinetwork (10) each comprising a reciprocal magnetic element forming a means of reciprocal locking.

4. Ensemble according to claim 1, **characterised in that** the means of locking (8) comprise at least one zone for nesting cooperating in a configuration for use with a reciprocal zone for nesting, forming means of reciprocal locking, provided on at least one lateral piece of cabinetwork (10).

5. Ensemble according to any of claims 1 to 4, **characterised in that** the panel (1) further comprises a means of braking the rotation of the main flap (3), said means of braking comprising in particular a rotor and a stator between which is interposed a viscous braking substance.

6. Ensemble according to claim 5, **characterised in that** the panel (1) comprises a second means of braking of the rotation of the annex flap (6).

7. Ensemble according to any of claims 1 to 6, **characterised in that** the first hinge (4) comprises two axes (11) of rotation.

8. Ensemble according to claim 7, **characterised in that** the means of actuating is incorporated into the first hinge (4) and comprises two springs (16) arranged respectively on axes (11) and arranged in order to induce a closing of said first hinge.

9. Ensemble according to any of claims 1 to 8, **characterised in that** the panel (1) comprises a covering material, said material extending between the flaps (3, 6) is such a way as to form a second flexible hinge (7).

## Patentansprüche

1. Anordnung (11), umfassend ein Ablagebord (1) zur Abdeckung des Kofferraums eines Kraftfahrzeugs und zwei Kofferraumfach-Seitenverkleidungen (10), wobei das Ablagebord durch seitliches Aufstützen auf die Verkleidungen befestigt wird, wobei das Ablagebord Folgendes umfasst:
- eine Platte (2) und einen Hauptflügel (3), die über ein erstes Scharnier (4), das quer verlaufend angeordnet ist, gelenkig miteinander verbunden sind, so dass der Hauptflügel um eine halbe Drehung zwischen einer Benutzungskonfiguration, in der er mit der Platte koplanar ist, und einer zusammengeklappten Konfiguration, in der er gegen die Platte geklappt ist, gedreht werden kann,
- ein Betätigungsmittel zum Wechseln in die zusammengeklappte Konfiguration,
- ein Mittel zur reversiblen Verriegelung (8) in Benutzungskonfiguration,
- einen Nebenflügel (6), der am Hauptflügel über ein zweites Scharnier (7), das parallel zum ersten Scharnier verläuft, gelenkig gelagert ist, so dass ein akkordeonartiges Zusammenklappen des Ablagebords ermöglicht wird,
wobei die Anordnung **dadurch gekennzeichnet ist, dass** die hinteren Seitenbereiche (12) des Nebenflügels in Bezug auf die Seitenverkleidungen freitragend sind, wenn sich das Ablagebord in Benutzungskonfiguration befindet und wenn die Verriegelung aktiviert ist, während sich die vorderen Seitenbereiche (13) des Nebenflügels auf die Seitenverkleidungen aufstützen, so dass durch Drücken auf den hinteren Teil (14) des Nebenflügels eine Drehung des Nebenflügels entlang dem zweiten Scharnier ermöglicht wird, wobei die Drehung das Ausführen der Entriegelung durch Indrehungversetzen des Nebenflügels entlang dem zweiten Scharnier ermöglicht.

2. Anordnung nach Anspruch 1, **dadurch gekennzeichnet, dass** das Verriegelungsmittel (8) zwei vorspringende Zapfen (9) auf jeder Seite der Seitenränder eines Flügels (3, 6) umfasst, wobei die Zapfen quer zwischen einer eingezogenen Position und einer ausgefahrenen Position gleitend befestigt sind, wobei die Zapfen jeweils von einem elastischen Spannmittel betätigt und in die ausgefahrene Position versetzt werden, wobei die Seitenverkleidungen (10) jeweils einen Dorn (15) umfassen, der ein reziprokes Verriegelungsmittel bildet, wobei die Drehung des Nebenflügels (6) durch Drücken auf dessen hinteren Teil (14) ein Passieren der Zapfen (9) auf beiden Seiten der Dorne mit Einzug der Zapfen gegen die elastischen Spannmittel bewirkt.

3. Anordnung nach Anspruch 1, **dadurch gekennzeichnet, dass** das Verriegelungsmittel (8) zwei magnetische Elemente umfasst, wobei die Seitenverkleidungen (10) jeweils ein reziprokes magnetisches Element umfassen, das ein reziprokes Verriegelungsmittel bildet.

4. Anordnung nach Anspruch 1, **dadurch gekennzeichnet, dass** das Verriegelungsmittel (8) mindestens einen Einfügebereich umfasst, der in Benutzungskonfiguration mit einem reziproken Einfügebereich zusammenwirkt, der ein reziprokes Verriegelungsmittel bildet und auf mindestens einer Seitenverkleidung (10) vorgesehen ist.

5. Anordnung nach einem der Ansprüche 1 bis 4, **dadurch gekennzeichnet, dass** das Ablagebord (1) ferner ein Mittel zum Bremsen der Drehung des Hauptflügels (3) umfasst, wobei das Bremsmittel insbesondere einen Rotor und einen Stator umfasst, zwischen denen eine viskose Bremssubstanz eingefügt ist.

6. Anordnung nach Anspruch 5, **dadurch gekennzeichnet, dass** das Ablagebord (1) ein zweites Mittel zum Bremsen der Drehung des Nebenflügels (6) umfasst.

7. Anordnung nach einem der Ansprüche 1 bis 6, **dadurch gekennzeichnet, dass** das erste Scharnier (4) zwei Drehachsen (11) umfasst.

8. Anordnung nach Anspruch 7, **dadurch gekennzeichnet, dass** das Betätigungsmittel in das erste Scharnier (4) integriert ist und zwei Federn (16) umfasst, die jeweils auf Höhe der Achsen (11) angebracht und angeordnet sind, um eine Schließung des ersten Scharniers zu bewirken.

9. Anordnung nach einem der Ansprüche 1 bis 8, **dadurch gekennzeichnet, dass** das Ablagebord (1) ein Überzugsmaterial umfasst, wobei sich dieses Material zwischen den Flügeln (3, 6) erstreckt, so dass es ein zweites biegsames Scharnier (7) bildet.
